Europäisches Patentamt

European Patent Office

Office européen des brevets

(19)

(11) **EP 0 919 889 A1**

(12) **EUROPEAN PATENT APPLICATION**

(43) Date of publication:
02.06.1999 Bulletin 1999/22

(51) Int. Cl.$^6$: **G05B 13/02**

(21) Application number: 97120766.7

(22) Date of filing: 26.11.1997

(84) Designated Contracting States:
**AT BE CH DE DK ES FI FR GB GR IE IT LI LU MC NL PT SE**
Designated Extension States:
**AL LT LV MK RO SI**

(71) Applicant:
**SIEMENS AKTIENGESELLSCHAFT**
**80333 München (DE)**

(72) Inventors:
• **Furumoto, Herbert, Dr.**
**91052 Erlangen (DE)**
• **Kemna, Andreas, Dr.**
**91054 Erlangen (DE)**
• **Michelsen, Finn Are, Dr.**
**7015 Trondheim (NO)**

(54) **Modelling, simulation and optimisation of continuous Kamyr digester systems**

(57) The invention discloses a simulator based on dynamic mechanistic models of continuous Kamyr digester systems. These include one- and two-vessel systems of both hydraulic and steam/liquor phase type. The simulator consists of three modes estimation and prediction, control structure design and simulation, and advisory control. The advisory control scheme is a closed loop model predictive control strategy where the calculated control actions are presented to the operators for decision support. Some simulation results reveal the potential of the simulator.

Figure 3: The model predictive control structure.

## Description

The invention concerns to the modelling, simulation and optimisation of continuous Kamyr digester systems.

The continuous Kamyr digester is one of the main components in the fibre line. Hence, it plays a key role for the product quality in pulp mills. Commonly it is hard to produce pulp with consistent high quality. This is because:

- The process incorporates long time delays and other non-linearities.
- There are strong interactions between the key process variables.
- There is influence by considerable process disturbances. The main process disturbance is the variation in the quality of wood chips fed into the digester.
- The process often suffices from insufficient instrumentation. Typically, the kappa number, which is the pulp quality measure for control, is not measured on-line (or at least when the pulp resides in the cooking zone).
- The set of manipulated inputs includes commonly several manually operated inputs, e g. liquor flows and temperature set-points. How to manipulate these in order to achieve the desired control performance is conventionally based on ad-hoc information from long-term experience and standardised tables.
- The process control is multivariate in that production rate and wash efficiency are important operating conditions as well.
- There are constraints that should or cannot be exceeded in the process. For instance, the cooking temperature should not get high peaks in order to prevent decreased pulp strength.

With this in mind it is highly desirable to have a unified and systematic procedure that incorporates system dynamics in the operator support system. Procedures based on a mathematical model of the process widely used as basis for this. Such support systems should include at least the three basic features:

1. Estimation of the current process state, i.e. a description of what the current process situation is.
2. Prediction of the process state over the future time horizon which covers the longest important time constant under consideration. This tells where the process goes.
3. Advise to the operator about what to do in order to achieve the desired objective for the process operation.

Control schemes that fit well into this framework are known as <u>m</u>odel <u>p</u>redictive <u>c</u>ontrol (MPC). Open loop predictions are used to calculate optimal control actions. Hence, good prediction capabilities of the model is essential.

State-space models based on first principles are ideal for long-range predictions when the model structure is appropriate, Modelling of chemical digesters has been made widely as reported in the literature. The model consists of mass-, momentum-, and energy balances in two-phase form. Thus, our approach is a mathematical model with as much first principle character as we have found necessary. However, a distributed model like this contains many parameters, and their values have to be based on different tests, approximations and assumptions. In addition, it is impossible to verify the numerous distributed variables by data from the available process measurements. Despite this, provided that the parameters are chosen or estimated properly, we believe that the model is more easily tuned to the plant, than would be the case with a simpler model. The basic assumptions behind this are that the model incorporates a correct structure of the physical mechanisms in the process and that the plant data used for identification are not too noisy.

The new Digester Advisory System is a simulator and control system based on these features. It has been applied to a Kamyr digester. This is a one-vessel hydraulic MCC digester. The main disturbance is variation in the blend of softwoods (pinus) and hardwoods (eucalyptus).

In this invention disclosure the simulator and control system are presented. A process description is given. The mathematical models are described in more detail below. Besides control systems are discussed. The simulator structure and some simulation results are presented.

### Process description:

The development of continuous Kamyr digester systems started in the nineteen thirties. There are four types of systems developed for different operating conditions determined by production rate, wood specie and chip density:

- One-vessel hydraulic (<900 tpd, SW/HW, >145 $kg/m^3$).
- One-vessel steam/liquor phase ($\cong$2000 tpd, HW, >130 $kg/m^3$)
- Two-vessel hydraulic (<1500-2000 tpd, SW/HW, >155 $kg/m^3$).
- Two-vessel steam/liquor phase ($\cong$2000 tpd, SW/HW, >130 $kg/m^3$).

Two-vessel systems, as compared to one-vessel systems, are used for woods which are difficult to impregnate (like most softwoods). By doing the impregnation in a separate vessel instead of in the top of the digester, the height of the digester can be reduced. This is particularly important at high production rates (> 1000 tpd).

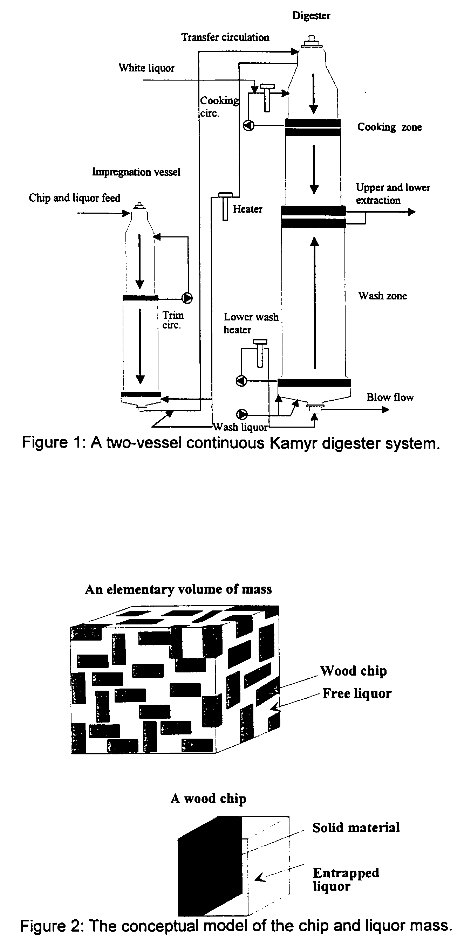

Figure 1 shows a sketch of a typical two-vessel system. In the impregnation vessel the alkalic liquor diffuses into the chips in order to provide even cooking. Also the initial delignification stage (inclusive removing the extractives) is performed here. The digester basically consists of two zones; (i) the cooking zone and (ii) the wash zone. In the former, the main chemical reactions take place. In the wash zone, counter-current wash water extracts the reaction products and the residual chemical components out of the chips. The extracted liquor is taken out through the extraction screens together with the cooking liquor. There are two liquor circulations for providing proper temperatures; a cooking circulation and a lower wash circulation. Additional alkali is charged to the cooking circulation (denoted modified continuous cooking (MCC)) for better alkali utilisation at cooking to low kappa numbers.

**Dynamic mechanistic models of digester systems:**

The mathematical models are adapted to the specific vessels by a number of steps:

- Modifications of earlier models from the literature.
- Manual parameter tuning.
- Automatic parameter tuning.

**Modification of earlier models:**

The applied models are based basically on a dynamic mechanistic model and are adapted to the impregnation and digester vessels by a number of modifications. These include:

- hydraulic versus steam/liquor phase characteristics in the vessel top;
- physical dimensions;
- locations of liquor circulations;
- alkali charge to the cooking circulation;
- the chemical reaction schemes and the stoichiometry are defined specifically for each of the three initial-, bulk-, and residual delignification stages. The blend of hardwood and softwood chips are the main process disturbance;
- the stiffness in the model is reduced in order to increase the simulation speed.

The non-linear state-space models consist of mass-, momentum-, and energy balances in two-phase form. Thus, their potential advantage is that they combine reaction kinetics, flow dynamics and thermodynamics. The main internal model variables are the chip and liquor level, the compaction of chips, the chip and liquor velocities, the lignin and carbohydrates (fiber) concentrations (giving pulp yield, kappa number and strength properties), the free and entrapped dissolved solids, the free and entrapped active alkali, and the chip and liquor temperatures. Figure 2 illustrates the conceptual model of the chip and liquor mass.

**Manual parameter tuning:**

There are a number of parameters in the models. Some of these are known with an acceptable accuracy as they represent given physical constants. These include vessel dimensions, gravity, specific weight of lignin, water etc. Others are physical constants which are fairly well known, with little or no variation, or for which the model outputs are weakly sensitive. Examples are viscosity factors, density of own-dry-wood, heat capacities, heat of reaction factors etc. These parameters are plant specific or found in the literature. They are regarded as constants in the models.

**Automatic parameter tuning:**

The remaining parameters are more difficult to determine, as they vary with time, operation point, or when disturbances occur. These may explain structural model errors, unmeasured and un-modelled process disturbances. Hence, by adapting these parameters automatically, these errors and disturbances are captured. We focus on the kappa number, the alkali concentration in the cooking circulation and the liquor circulation temperatures in this adaptation.

It appears that the kappa number is very sensitive to cooking temperature changes. Hence, by adjusting the activation energy for the bulk lignin reactions adaptation to the kappa number is achieved. However, due to the long transport delay from the cooking zone to washer where the kappa number is measured, the adaptation to the kappa number is based on an estimate of the measurement at the end of the cooking zone. This estimate is made by adjusting the kappa measurement. The advantage of this approach is that a tighter tuning can be made, giving better adaptation.

Adaptation to the alkali concentration in the cooking circulation is made by varying the consumption factor for the alkali in the bulk delignification stage.

The efficiency factors for the liquor circulations account for both the efficiency of the heat exchangers and the degree of mixing in area near the liquor circulation inlets/outlets. These are estimated automatically to adapt the circulation temperatures. This adaptation is specially necessary do due to significant different circulation flows at different operating points.

The parameters are tuned automatically using SISO (Single Input Single Output)-, PI-like algorithms.

## Control:

In this section, the general digester control issues concerning the simulator are discussed.

## Control objectives:

The control objectives as focused in the invention are:

(1) Disturbance rejection for the kappa number.
(2) Setpoint tracking for the kappa number.
(3) Setpoint tracking for the production rate.

## Control structures:

The purpose of the control structure study is threefold:

1. To simulate the existing control strategy. This includes:

-    production rate control;
-    kappa number control.
     Production rate control includes control of
-    chip meter speed;
-    alkali charge;
-    dilution factor.

2. To show the limitations in the existing control and possible improvements which may be made.
3. To be a controller development laboratory for the advisory control mode as to be implemented in the control room.

Both automatic and advisory control are considered. Advisory control means that the controller gives the operator new advises at each sampling instance for the next control action. Thus, the operator has the final decision in implementing the control actions. This is how we mimic the way the operator runs the process. In this way we can evaluate how the control performance is influenced when the advised control actions are implemented or not.

SISO (Single Input Single Output) control loops are considered in the invention for kappa number control.

## Control signals:

Commonly, the operators do disturbance rejection for kappa number control by watching a number of process signals. When significant sustained disturbances are detected in the trends, the cooking temperature is adjusted. Some of the important process signals include typically the kappa number i.e. at the blow tank, the blow flow and the dissolved, solids content in the extraction flow. In addition to these, the kappa number at the end of the cooking zone is used as feedback signals for disturbance rejection in the simulator. By this additional signal it is revealed how the kappa number control can be improved considerably when using model based control. The cooking temperature setpoint is used as control signal (manipulated variable).

## Control algorithms:

PI-control and Model Predictive Control (MPC) are used as control algorithms. In this sub section the specific features of the MPC algorithms are discussed.

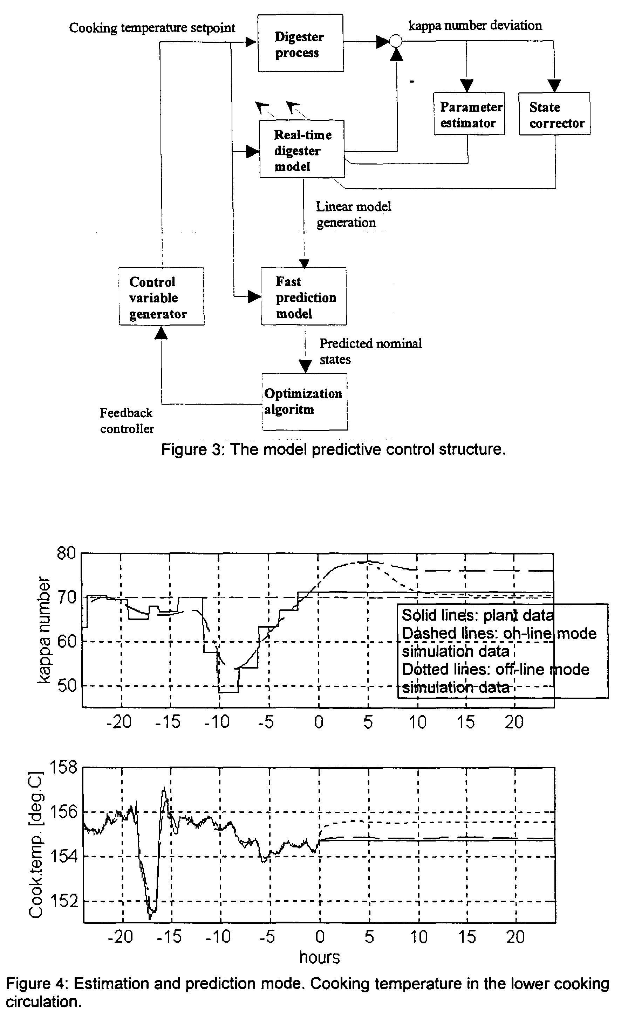

MPC is a control algorithm using a mathematical model of the system to predict future behaviour. An optimisation algorithm is used to calculate the optimal control actions taking into account input/output constraints and other non-linearities in the system. The applied algorithms are based on a model predictive control toolbox. These solve the optimisation problem by quadratic programming. Figure 3 shows the control structure.

The state estimator or state corrector is an algorithm that updates the model states based on the deviation between the process and model outputs. Here this consists of added integrators to the output of the controller model. This is known as output disturbance estimator. The simplest implementation of this is the so-called DMC (Dynamic Matrix Control) approach where a pure integrator (unity gain) is added to the output. The estimator parameters are tuning parameters.

A linear (LMPC) and a non-linear (NMPC) algorithm are considered. The non-linear algorithm differs from the linear basically in that the non-linear digester model is relinearized giving the fast prediction model at each control sample. In this way, a new linear MPC controller is made at every sample.

In the LMPC scheme, the real-time model is the same as the fast prediction model. This is generated by linearization of the non-linear model at start-up time. Thus, there is no parameter updating in this scheme. The weakness of this scheme is that the controller model is not updated when there are measured process changes, e.g. changed production rate, unless the program is restarted. It is this error plus the unmeasured process disturbances which update the model states. In the NMPC scheme, however, the measured process changes are continuously adjusted for in the relinearization. The unmeasured disturbances are corrected for partly by the parameter estimator and the state estimator.

**The Siemens Digester Advisory System:**

The new Digester Advisory System is a simulator environment for improved digester operation and control structure design. The simulator is an operator support system which shows what the past and present process states are, what the future process state will be and what the operator should do in order to control the kappa number to the setpoint. This section explains the different modes in more detail and shows some examples.

**Estimation and prediction mode:**

This mode has two sub modes; one for on-line and one for off-line operation.

The on-line mode shows the current status of the process. In addition to the most recent 24 hrs history, the future 24 hrs of predictions are also shown to the operator. The predictions are based on constant model inputs and parameters. 6 minutes sampling period is used. The intention with this mode is to show how good the model traces the process, what the current state is and where the process would go assuming nothing is changed over the next 24 hrs. This is valuable information to the operators for deciding how to control their process based on their knowledge and experiences.

In the off-line mode, the operator may test his strategies to control the process without affecting the real process. Either the current state from the on-line mode or a historic state from a database may be the starting point for the analysis. The operator may change all available process inputs including chip meter speed, liquor flows, - temperatures and alkali concentrations and the blow flow.

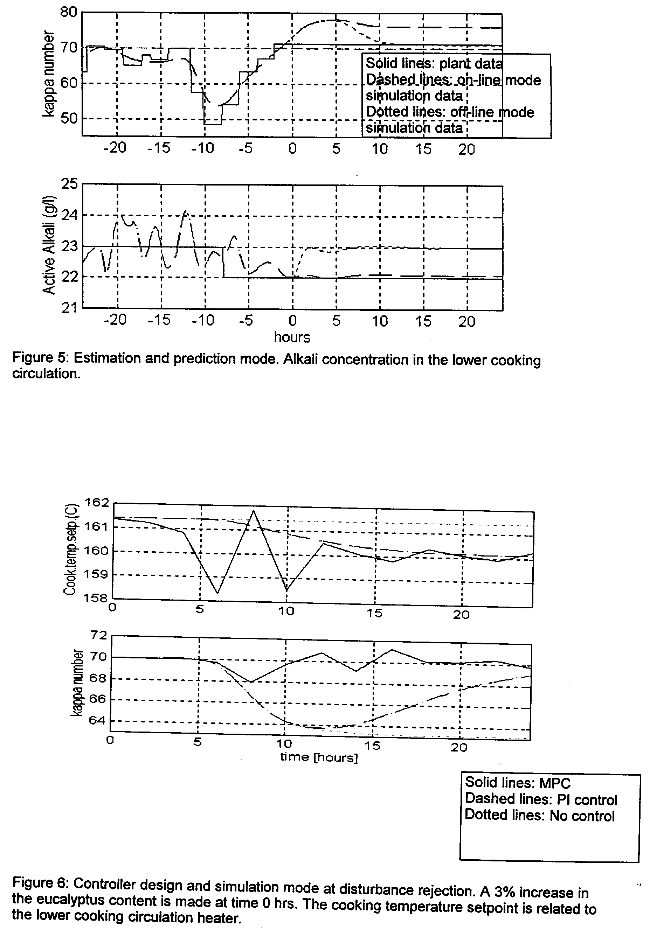

Some simulation results using data from the Kamyr digester are shown in Figure 4 and 5. The cooking temperature and the alkali concentration are measured in the lower cooking circulation. The kappa number is measured by laboratory test and samples are taken at the blow tank. The data stems from a period where the chip meter speed is considerably reduced at -19 to -17 hrs and the eucalyptus content in the chip blend is increased considerably at -24 hrs. The first 24 hours along the time axes (i.e. -24 hrs. to 0 hrs.) denote the estimation stage. This is followed by a prediction of the next 24 hours (0 hr. to 24 hrs). In the off-line mode, the lower heater temperature setpoint is reduced 1.5 deg. C such that the predicted kappa number approaches the setpoint 70. Figure 5 shows alternatively how the kappa number approaches the setpoint when increasing the white liquor active alkali concentration by 13 g/l.

The estimation of the kappa number shows that the model is able to handle low frequency components only. This is due to the long time delays in the process and the lowpass filtering which is made in the blow tank downstream of the digester.

Hence, the high frequency components in the real kappa measurements may be explained by measurement noise. The adaptation to the cooking temperature almost perfect.

**Controller design and simulation mode:**

The control features as described in section 4 make the basis for this mode. There are two main options for simulation; (1) disturbance rejection and (2) setpoint change in the kappa number and the production rate. The simulation is menu driven and the controller parameters are user options.

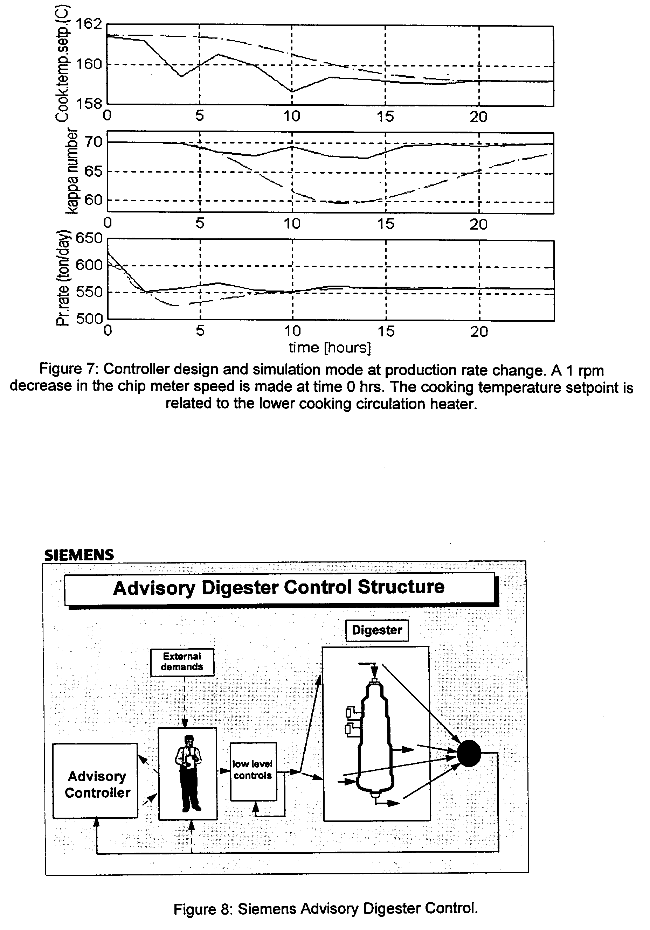

Figure 6 and 7 show some examples using data from the Portucel digester. The cooking temperature setpoint is related to the lower cooking circulation heater. Initially there is steady-state conditions and the kappa number is at the setpoint 70. PI control is continuous whereas the sample rate for the MPC is two hours. It appears that the control performance greatly improves by use of MPC and feedback from the kappa at the end of the cooking zone compared to feedback from the kappa at the blow tank (conventional control). The control is, however, far more aggressive in the MPC case compared to the PI control case. For comparison the response at no control is also shown for the disturbance rejection.

Similar results also appears concerning kappa number setpoint change.

**Advisory control mode:**

The intention with this mode is to give the process operators on-line advises about what the cooking temperature should be in order to minimise the kappa number (pulp quality) deviations from the setpoint. The general structure is illustrated in Figure 8.

Available information from the digester and requirements set by the operator make the basis for the advise calculations. External demands may be constraints related to actuators giving for instance limitations to how fast the cooking temperature can be changed. In this example the low level control includes temperature control for the cooking circulation heat exchanger.

The control advises are printed to a paper printer and simultaneously shown at the PC screen to the operator. In this way, the operator decides whether the recommended control actions should be implemented on the digester or not.

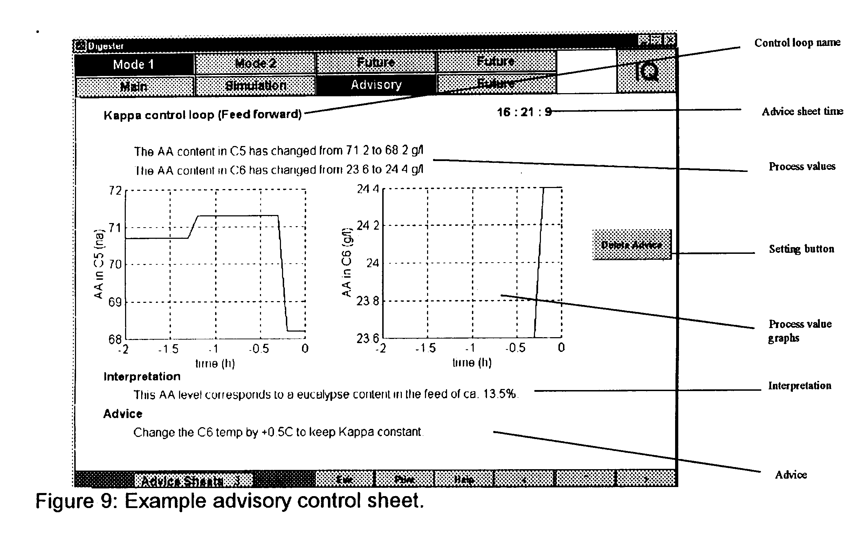

Figure 9 shows an example of an advise sheet using data from the described digester.

**Summary and conclusions:**

The new Digester Advisory System is a simulator environment for improved digester operation and control structure design. The usability of the simulator can be summarised as follows:

- In the Estimation and Prediction mode, the operator supervises the current state of the process including both measurable and non-measurable process variables. From the past 24 hrs. of data it appears how good the simulator is able to follow the process. Further he can see where the process is going from the current state. Based on this, the operator can evaluate how the process is running and then decide what adjustments which are necessary in order to run the process in the desired way. Moreover, the operator can test off-line what adjustments which are necessary in order to run the process in the desired way in order to achieve the best result. This is valuable also for process learning.
- In Controller Design and Simulation mode, the process engineers can test and evaluate alternative control strategies in order to decide what the best pairings between manipulated variables and process outputs are. Further he can evaluate what control algorithm which gives the best performance. Based on this, he may be able to give the plant directors advises on what investments are needed in order to optimise the plant operation.
- The Advisory Control mode gives the process operators continuously on-line advises on how to adjust the regulatory controller setpoints in order to achieve more consistent pulp quality.

Fundamental mathematical models of the digester system as a basis for the simulator are used. By modelling the controlled variable for the pulp quality, i.e. the kappa number, and its dependency on the different pulping conditions, there is given a mathematical description that potentially explains the physical behaviour of the mass inside the digester.

The following conclusions may be drawn from the study of controlling the kappa number by using the lower cooking circulation temperature as manipulated variable in a one-vessel hydraulic digester:

- Unmeasured disturbances are caused by variations in the digester feed. Since the hardwoods/softwoods content is measured infrequently, this signal is not suitable for feed-forward control. We have also considered using variations in the alkali concentration in the upper cooking circulation as an indirect signal for these disturbances. However, due to the fact that the eucalyptus content acts not only through the alkali concentration on the kappa number, this was either useful for feed-forward control.
- Model predictive control schemes rely on models with satisfactory long-range prediction capabilities. Further, state-space models based on first principles are ideal for long-range predictions when the model structure is appropriate. However, due to the low sampling rate of the hardwood/softwood content, the results based on the non-linear digester model indicate that the predictions may be a limitation. Using extracted linear models in the MPC algorithm may add further to this limitation. However, the results also indicate that the applied algorithms may give improved results compared to conventional PI control.

- MPC is especially valuable for setpoint changes when these are known in advance and included in the control calculation.
- Through tighter control, the improved control strategy has potential to yield more consistent product quality and increased product quantity.

The invention includes specifically the following characteristica:

- The kinetic parameters are dependent on location (vectors) according to the three delignification stages.
- The digester shell is conic which implicates that the equations for the compaction and the liquor velocity are functions of the local cross-sectional area.
- There are two cooking circulations with addition of alkali in one of them.
- Inclusion of hardwood/softwood profiles affects e.g. the kinetics.
- Inclusion of efficiency-factors for the heat exchanges also accounts for non-perfect mixing in the locations around the circulation screens.
- Proposed is a new concept for on-line parameter-tuning.

The mathematical model of the Kamyr-digester will be described by a set of differential equations together with the nomenclature in the appendix:

Appendix

Differential equations for Kamyr digester

$$\frac{\partial \epsilon_c}{\partial t^*} = -\frac{\partial}{\partial z^*}(\epsilon_c v_c^*) + \frac{1}{Pe_c}\frac{\partial^2 \epsilon_c}{\partial z^{*2}} \tag{1}$$

$$\frac{\partial v_l^*}{\partial z^*} = \frac{1}{1-\epsilon_c}\left((v_l^* - v_c^*)\frac{\partial \epsilon_c}{\partial z^*} - \epsilon_c \frac{\partial v_c^*}{\partial z^*} + \left(\frac{1}{Pe_c} - \frac{1}{Pe_l}\right)\frac{\partial^2 \epsilon_c}{\partial z^{*2}}\right) \tag{2}$$

$$\frac{\partial \alpha_{lig}}{\partial t^*} = -v_c^*\frac{\partial \alpha_{lig}}{\partial z^*} - t_0 r_{lig} + \frac{1}{Pe_c}\frac{\partial^2 \alpha_{lig}}{\partial z^{*2}} \tag{3}$$

$$\frac{\partial \alpha_{carb}}{\partial t^*} = -v_c^*\frac{\partial \alpha_{carb}}{\partial z^*} - t_0 r_{carb} + \frac{1}{Pe_c}\frac{\partial^2 \alpha_{carb}}{\partial z^{*2}} \tag{4}$$

$$\frac{\partial \rho_{EA.el}^*}{\partial t^*} = -v_c^*\frac{\partial \rho_{EA.el}^*}{\partial z^*} - t_0 \rho_{ODW}\left(\frac{b_{lig}r_{lig}}{\rho_{EA,0}}\right. \tag{5}$$

$$\left. + \frac{b_{carb}\rho_{carb}}{\rho_{EA,0}}\right) - \frac{1}{Sc_{EA}\epsilon_c}(\rho_{EA.el}^* - \rho_{EA.fl}^*) + \frac{1}{Pe_c}\frac{\partial^2 \rho_{EA.el}^*}{\partial z^{*2}}$$

$$\frac{\partial \rho_{ds.el}^*}{\partial t^*} = -v_c^*\frac{\partial \rho_{ds.el}^*}{\partial z^*} + t_0 \rho_{ODW}\left(\frac{(1+b_{lig})r_{lig}}{\rho_{ds.0}}\right. \tag{6}$$

$$\left. + \frac{(1+b_{carb})r_{carb}}{\rho_{ds.0}}\right) - \frac{1}{Sc_{ds}\epsilon_c}(\rho_{ds.el}^* - \rho_{ds.fl}^*) + \frac{1}{Pe_c}\frac{\partial^2 \rho_{ds.el}^*}{\partial z^{*2}}$$

$$\frac{\partial \rho_{EA.fl}^*}{\partial t^*} = -v_l^*\frac{\partial \rho_{EA.fl}^*}{\partial z^*} + \frac{1}{Sc_{EA}\epsilon_l}(\rho_{EA.el}^* - \rho_{EA.fl}^*) + \frac{1}{Pe_l}\frac{\partial^2 \rho_{EA.fl}^*}{\partial z^{*2}} \tag{7}$$

$$\frac{\partial \rho_{ds.fl}^*}{\partial t^*} = -v_l^*\frac{\partial \rho_{ds.fl}^*}{\partial z^*} + \frac{1}{Sc_{ds}\epsilon_l}(\rho_{ds.el}^* - \rho_{ds.fl}^*) + \frac{1}{Pe_l}\frac{\partial^2 \rho_{ds.fl}^*}{\partial z^{*2}} \tag{8}$$

$$\frac{\partial v_c^*}{\partial t^*} = -v_c^*\frac{\partial v_c^*}{\partial z^*} - \frac{\rho_{c,0}}{\rho_c^{*'}\epsilon_c}\frac{\partial p_c^*}{\partial z^*} - \frac{\rho_{l,0}}{\rho_c^{*'}}\frac{\partial p_l^*}{\partial z^*} + \frac{1}{Fr} - \frac{d}{v_0^2}\frac{1}{\epsilon_c \rho_c^{*'}}F_\mu \tag{9}$$

$$- \frac{\rho_{c,0}}{\rho_c^{*'}Re_{\Lambda.c}\epsilon_c}(v_c^* - v_l^*)$$

$$\frac{\partial p_l^*}{\partial z^*} = -\frac{\rho_l^{*'}}{\rho_{l,0}}v_l^*\frac{\partial v_l^*}{\partial z^*} + \frac{\rho_l^{*'}}{\rho_{l,0}}\frac{1}{Fr} - \frac{1}{Re_{\Lambda.l}(1-\epsilon_c)}(v_l^* - v_c^*) \tag{10}$$

$$\frac{\partial T_c^*}{\partial t^*} = -v_c^*\frac{\partial T_c^*}{\partial z^*} + \frac{\rho_c^* \rho_{c,0} d\Delta h_r r}{v_0 T_0 (C_{pc}\rho_c)^{*'}} \tag{11}$$

$$- \frac{1}{Re_c Pr_c}\left(\frac{\partial^2 T_c^*}{\partial z^{2*}} + \frac{1}{\epsilon_c}\frac{\partial \epsilon_c}{\partial z^*}\frac{\partial T_c^*}{\partial z^*}\right)$$
$$- St_{cl}(T_c^* - T_l^*) - St_{cw}(T_c^* - T_a^*)$$

$$\frac{\partial T_l^*}{\partial t^*} = -v_l^*\frac{\partial T_l^*}{\partial z^*} + \frac{1}{Re_l Pr_l}\left(\frac{\partial^2 T_l^*}{\partial z^{2*}} + \frac{1}{\epsilon_l}\frac{\partial \epsilon_l}{\partial z^*}\frac{\partial T_l^*}{\partial z^*}\right) \tag{12}$$
$$- St_{lc}(T_l^* - T_c^*) - St_{lw}(T_l^* - T_a^*)$$

# Nomenclature

This nomenclature list is not complete. To restrict the length of the list, most of the symbols that are used in specific contexts are omitted. These are explained when first introduced. Vector symbols are typeset in bold, like in $\mathbf{x}$. Scaled variables have superscript $^*$.

## Latin letters

| Symbol | Description | Dimension |
|---|---|---|
| $A$ | cross section area of the digester | $m^2$ |
| $A_i$ | frequency factor, $i = 1.2$ | $(kg/(m^3 s))^{-1}$ |
| $b_{lig}$ | factor of comsumption for lignin | $kg$ EA$/kg$ lig. |
| $b_{carb}$ | factor of comsumption for carbohydrates | $kg$ EA$/kg$ carb. |
| $c_\kappa$ | Kappa number coefficient | – |
| $C_{p.w}$ | heat capacity for the wood materials | $J/(kg^\circ C)$ |
| $C_{p.liq}$ | heat cap. for the entr. and the free liquor | $J/(kg^\circ C)$ |
| $D_{EA}$ | interphase diffusion rate coeff. for alkali | $s^{-1}$ |
| $D_{ds}$ | interphase diff. rate coeff. for diss. solids | $s^{-1}$ |
| $D_c$ | dispersion coefficient for the chip plug | $m^2/s$ |
| $D_l$ | dispersion coefficient for the free liquor | $m^2/s$ |
| $D_{cond.i}$ | mass transfer coeff. for condensation of steam with respect to phase $i = c.l$ | $s^{-1}$ |
| $E_c$ | spesific energy for the chip plug | $J/kg$ |
| $E_l$ | spesific energy for the free liquor | $J/kg$ |
| $E_i$ | spesific activation energy, $i = 1.2$ | $J/mol$ |
| $F_\lambda$ | force of viscous interphase friction | $N/m^3$ |
| $F_\mu$ | force of dry friction | $N/m^3$ |
| $g$ | the constant of gravity | $m/s^2$ |
| $h_c$ | chip level | $m$ |
| $h_l$ | free liquor level | $m$ |
| $h_t$ | distance from dig. bottom to the top section | $m$ |
| $h_s$ | dist. from the bottom to the top separator | $m$ |
| $h_i$ | chip/liquor level relative to $h_t$ | $m$ |
| $H_i$ | spesific enthalpy for phase $i = c.l$ | $J/kg$ |

# Greek letters

| Symbol | Description | Dimension |
|---|---|---|
| $\alpha_{lig}$ | mass fraction of lignin in a wood chip | $kg/kgODW$ |
| $\alpha_{carb}$ | mass fraction of carb. in a wood chip | $kg/kgODW$ |
| $\alpha_{carb}^0$ | mass fraction of non-reactive carb. | $kg/kgODW$ |
| $\epsilon_i$ | volume fraction of phase $i = c, l$ | $m^3/m^3$ mass |
| $\epsilon_{i,in}$ | vol. frac. of phase $i = c, l$ in the feed flow | $m^3/m^3$ mass |
| $\epsilon_{sm}$ | vol. frac. of solid mat. in the chips | $m^3/m^3$ ODW |
| $\epsilon_{el}$ | vol. frac. of entr. liq. in the chips | $m^3/m^3$ ODW |
| $\epsilon_{air}$ | vol. frac. of air in the chips | $m^3/m^3$ ODW |
| $\epsilon_{air,atm}$ | vol. frac. of air in the chips at atmospheric pressure and temp. $20°C$ | $m^3/m^3$ ODW |
| $\epsilon_p$ | vol. frac. of voids in the chips | $m^3/m^3$ ODW |
| $\nabla$ | divergence operator | $m^{-1}$ |
| $\gamma$ | space coordinate for interphase transfer | $m$ |
| $\kappa_s$ | absolute humidity for steam | $kg$ water$/kg$ air |
| $\kappa_i$ | equiv. abs. humidity for the surface of phase $i$ | $kg$ water$/kg$ air |
| $\Phi$ | specific potential energy | $J/kg$ |
| $\kappa$ | Kappa number | - |
| $\Lambda$ | viscous friction term | $kg/(m^3 s)$ |
| $\mu$ | coefficient for dry friction | $[-]$ |
| $\eta_i$ | coeff. for viscous eddy diffusion | $kg/(ms)$ |
| $\rho_c$ | mass density of a wood chip | $kg/m^3$ ODW |
| $\rho_l$ | mass density of free liquor | $kg/m^3$ free liq. |
| $\rho_{c,in}$ | mass density of chips in the steam zone | $kg/m^3$ ODW |
| $\rho_{dc,in}$ | dry solid content in the feed | $kg/m^3$ ODW |
| $\rho_{l,in}$ | mass density of free liq. in the steam zone | $kg/m^3$ free liq. |
| $\rho_{sm}$ | mass density of solid mat. in wood | $kg/m^3$ ODW |
| $\rho_{el}$ | mass density of the entr. liq. in wood | $kg/m^3$ ODW |
| $\rho_{EA}$ | specific weight of effective alkali | $kg/m^3$ |
| $\rho_{EA,el}$ | mass density of entr. eff. alkali | $kg/m^3$ ODW |
| $\rho_{lig}$ | specific weight of lignin | $kg/m^3$ |
| $\rho_{carb}$ | specific weight of carbohydrates | $kg/m^3$ |
| $\rho_{ds}$ | specific weight of dissolved solids | $kg/m^3$ |
| $\rho_{ds,el}$ | mass density of the entr. diss. solids | $kg/m^3$ ODW |
| $\rho_w$ | specific weight of water | $kg/m^3$ |
| $\rho_{w,el}$ | mass density of water in chips | $kg/m^3$ ODW |
| $\rho_{EA,fl}$ | mass density of free eff. alkali | $kg/m^3$ free liq. |
| $\rho_{ds,fl}$ | mass density of free diss. solids | $kg/m^3$ free liq. |
| $\rho_{w,fl}$ | mass density of water in the free liq. | $kg/m^3$ free liq. |
| $\rho_{ODW}$ | mass density of oven dry chips | $kg/m^3$ ODW |
| $\rho_{air}$ | mass density of dry air | $kg/m^3$ |
| $\nu_s$ | local velocity of sound | $m/s$ |
| $v_i$ | specific volume of phase $i$ | $m^3/kg$ |
| $\omega_{180}$ | the lowest frequency where the phase curve cross $-180$ degrees | radians/ dim.less time |

| Symbol | Description | Dimension |
|--------|-------------|-----------|
| $\Delta h_{lig}$ | coeff. for heat of lignin reactions | $J/(kg/kg\ \text{ODW})$ |
| $\Delta h_{carb}$ | coeff. for heat of carb. reactions | $J/(kg/kg\ \text{ODW})$ |
| $\Delta h_r$ | coeff. for total heat of chem. reactions | $J/(kg/kg\ \text{ODW})$ |
| $\lambda_w$ | latent heat of condensation | $kJ/kg$ water |
| $k_{d.ds}$ | diffusion coefficient for dissolved solids | — |
| $k_{iz}$ | coeff. for vertical heat of conduction | $J/(ms^{\circ}C)$ |
| $k_{cl}$ | coeff. for interphase heat of conduction | $J/(m^3s^{\circ}C)$ |
| $k_{iw}$ | coeff. for heat of conduction between phase $i=c,l$ and the side walls | $J/(m^3s^{\circ}C)$ |
| $k_{is}$ | coeff. for heat of conduction between phase $i=c,l$ and the steam | $J/(m^3s^{\circ}C)$ |
| $k_{rpm}$ | chip meter speed coefficient | $(m^3/s)/rpm$ |
| $k_{ts}$ | empiric coefficient for the top section | $m^{-1}$ |
| $k_i$ | Arrhenius coefficients $i=1,2$ | $(skg\ \text{EA}/m^3\text{entr. liq.})^{-1}$ |
| $L/W$ | liquor-to-wood ratio | $m^3/\text{tonne ODW}$ |
| $M_{air}$ | molar weight of air | $kg/kmol$ |
| $M_{water}$ | molar weight of water | $kg/kmol$ |
| $n_{air}$ | number of mol of air molecules | $mol$ |
| $n_c$ | number of chips per elementary volume | $[-]$ |
| $p'_c$ | chip plug (bed) pressure | $Pa$ |
| $p_c$ | mean chip plug pressure | $Pa$ |
| $p_l$ | free liquor pressure | $Pa$ |
| $p_s$ | steam pressure | $Pa$ |
| $p_{s,p}$ | partial saturated pressure of steam | $Pa$ |
| $p_{air}$ | partial air pressure | $Pa$ |
| $Q_{cz}$ | vertical heat of conduction for chips | $J/(m^2s)$ |
| $Q_{clw}$ | sum of interphase heat of conduction and that through the side walls | $J/(m^2s)$ |
| $q_{c,in}$ | chip meter speed | $rpm$ |
| $q_{bf}$ | blow flow | $m^3/s$ |
| $r_{lig}$ | reaction rate of lignin | $kg/(kg\ \text{ODW}\cdot s)$ |
| $r_{carb}$ | reaction rate of carbohydrates | $kg/(kg\ \text{ODW}\cdot s)$ |
| $r$ | the sum of $r_{lig}$ and $r_{carb}$ | $kg/(kg\ \text{ODW}s)$ |
| $R$ | molar gas constant $\approx 8.314$ | $J/(mol\ K)$ |
| $R_1$ | viscous friction coefficient | $kg/(m^3s)$ |
| $R_2$ | viscous friction coefficient | $kg/m^4$ |
| $RPM$ | chip meter speed | $rpm$ |
| $t$ | time coordinate | $s$ |
| $T_i$ | phase temperature $i=c,l$ | $^{\circ}C$ |
| $T_s$ | steam temperature | $^{\circ}C$ |
| $T_a$ | ambient temperature | $^{\circ}C$ |
| $U_i$ | spesific internal energy, $i=c,l$ | $J/kg$ |
| $v_i$ | phase velocity $i=c,l$ | $m/s$ |
| $v_{i,\gamma}$ | interphase material velocity $i=c,l$ | $m/s$ |
| $V_{outlet}$ | the volume of the outlet section | $m^3$ |
| $Y$ | yield | $kg/kgODW$ |
| $z$ | vertical space coordinate | $m$ |

**Claims**

1. Controller for a continuous cooking vessel for the production of pulp using state space and process models, characterised thereby that physical and/or chemical values of the cooking vessel or cooking process are modelled as state space or process values and that the modelled values are used for process optimization

2. Controller according to claim 1, characterized thereby that the Kappa number is modelled as a physical value.

3. Controller according to claim 1, characterized thereby that the chemical composition is modelled as a chemical value.

4. Controller according to claim 3, where the so-called Kraft process is used for the cooking process, characterized thereby that active alkali is modelled as a chemical value.

5. Controller according to claim 4, characterized thereby that the concentration of active alkali is modelled.

6. Controller according to claim 1, characterized thereby, that the temperature in the cooking vessel is modelled as a physical value.

7. Controller according to claim 1, characterized thereby that typical fluid dynamical values of the cooking vessel, especially volumetric flow rate, pressure difference, mass flow rate and/or energy/heat balances are modelled as physical values.

8. Controller according to one of claims 2 to 7, characterized thereby that an exact mathematical model is available for the physical and chemical values.

9. Controller according to claim 8, characterized thereby that the model contains the following equations:
Differential equations (1) - (12) see appendix

10. Controller according to claim 9, characterized thereby that adaptation of some or all of the important coefficients in the model equations is performed online.

11. Controller according to one of the claims 1 to 10 characterized thereby that a so-called advisory system (50,55) is used as a means of communication with the operator.

12. Controller according to claim 11, characterized thereby, that the advisory system (50,55) is used to display process conditions.

13. Controller according to claim 12, characterized thereby, that the display is either graphical (61 - 63) or numerical and that the operator (P) receives messages in regular time intervalls.

$$\frac{\partial \epsilon_c}{\partial t^\bullet} = -\frac{\partial}{\partial z^\bullet}(\epsilon_c v_c^\bullet) + \frac{1}{Pe_c}\frac{\partial^2 \epsilon_c}{\partial z^{\bullet 2}} \qquad (1)$$

$$\frac{\partial v_l^\bullet}{\partial z^\bullet} = \frac{1}{1-\epsilon_c}((v_l^\bullet - v_c^\bullet)\frac{\partial \epsilon_c}{\partial z^\bullet} - \epsilon_c\frac{\partial v_c^\bullet}{\partial z^\bullet} + (\frac{1}{Pe_c} - \frac{1}{Pe_l})\frac{\partial^2 \epsilon_c}{\partial z^{\bullet 2}}) \qquad (2)$$

$$\frac{\partial \alpha_{lig}}{\partial t^\bullet} = -v_c^\bullet\frac{\partial \alpha_{lig}}{\partial z^\bullet} - t_0 r_{lig} + \frac{1}{Pe_c}\frac{\partial^2 \alpha_{lig}}{\partial z^{\bullet 2}} \qquad (3)$$

$$\frac{\partial \alpha_{carb}}{\partial t^\bullet} = -v_c^\bullet\frac{\partial \alpha_{carb}}{\partial z^\bullet} - t_0 r_{carb} + \frac{1}{Pe_c}\frac{\partial^2 \alpha_{carb}}{\partial z^{\bullet 2}} \qquad (4)$$

$$\frac{\partial \rho_{EA.el}^\bullet}{\partial t^\bullet} = -v_c^\bullet\frac{\partial \rho_{EA.el}^\bullet}{\partial z^\bullet} - t_0 \rho_{ODW}(\frac{b_{lig}r_{lig}}{\rho_{EA.0}} \qquad (5)$$

$$+ \frac{b_{carb}\rho_{carb}}{\rho_{EA.0}}) - \frac{1}{Sc_{EA}\epsilon_c}(\rho_{EA.el}^\bullet - \rho_{EA.fl}^\bullet) + \frac{1}{Pe_c}\frac{\partial^2 \rho_{EA.el}^\bullet}{\partial z^{\bullet 2}}$$

$$\frac{\partial \rho_{ds.el}^\bullet}{\partial t^\bullet} = -v_c^\bullet\frac{\partial \rho_{ds.el}^\bullet}{\partial z^\bullet} + t_0 \rho_{ODW}(\frac{(1+b_{lig})r_{lig}}{\rho_{ds.0}} \qquad (6)$$

$$+ \frac{(1+b_{carb})r_{carb}}{\rho_{ds.0}}) - \frac{1}{Sc_{ds}\epsilon_c}(\rho_{ds.el}^\bullet - \rho_{ds.fl}^\bullet) + \frac{1}{Pe_c}\frac{\partial^2 \rho_{ds.el}^\bullet}{\partial z^{\bullet 2}}$$

$$\frac{\partial \rho_{EA.fl}^\bullet}{\partial t^\bullet} = -v_l^\bullet\frac{\partial \rho_{EA.fl}^\bullet}{\partial z^\bullet} + \frac{1}{Sc_{EA}\epsilon_l}(\rho_{EA.el}^\bullet - \rho_{EA.fl}^\bullet) + \frac{1}{Pe_l}\frac{\partial^2 \rho_{EA.fl}^\bullet}{\partial z^{\bullet 2}} \qquad (7)$$

$$\frac{\partial \rho_{ds.fl}^\bullet}{\partial t^\bullet} = -v_l^\bullet\frac{\partial \rho_{ds.fl}^\bullet}{\partial z^\bullet} + \frac{1}{Sc_{ds}\epsilon_l}(\rho_{ds.el}^\bullet - \rho_{ds.fl}^\bullet) + \frac{1}{Pe_l}\frac{\partial^2 \rho_{ds.fl}^\bullet}{\partial z^{\bullet 2}} \qquad (8)$$

$$\frac{\partial v_c^\bullet}{\partial t^\bullet} = -v_c^\bullet\frac{\partial v_c^\bullet}{\partial z^\bullet} - \frac{\rho_{c.0}}{\rho_c^{\bullet'}\epsilon_c}\frac{\partial p_c^\bullet}{\partial z^\bullet} - \frac{\rho_{l.0}}{\rho_c^\bullet}\frac{\partial p_l^\bullet}{\partial z^\bullet} + \frac{1}{Fr} - \frac{d}{v_0^2}\frac{1}{\epsilon_c\rho_c^{\bullet'}}F_\mu \qquad (9)$$

$$- \frac{\rho_{c.0}}{\rho_c^{\bullet'}Re_{\Lambda.c}\epsilon_c}(v_c^\bullet - v_l^\bullet)$$

$$\frac{\partial p_l^\bullet}{\partial z^\bullet} = -\frac{\rho_l^{\bullet'}}{\rho_{l.0}}v_l^\bullet\frac{\partial v_l^\bullet}{\partial z^\bullet} + \frac{\rho_l^{\bullet'}}{\rho_{l.0}}\frac{1}{Fr} - \frac{1}{Re_{\Lambda.l}(1-\epsilon_c)}(v_l^\bullet - v_c^\bullet) \qquad (10)$$

$$\frac{\partial T_c^\bullet}{\partial t^\bullet} = -v_c^\bullet\frac{\partial T_c^\bullet}{\partial z^\bullet} + \frac{\rho_c^\bullet\rho_{c.0}d\Delta h_r r}{v_0 T_0 (C_{pc}\rho_c)^\bullet} \qquad (11)$$

$$- \frac{1}{Re_c Pr_c}(\frac{\partial^2 T_c^\bullet}{\partial z^{2\bullet}} + \frac{1}{\epsilon_c}\frac{\partial \epsilon_c}{\partial z^\bullet}\frac{\partial T_c^\bullet}{\partial z^\bullet})$$

$$- St_{cl}(T_c^\bullet - T_l^\bullet) - St_{cw}(T_c^\bullet - T_a^\bullet)$$

$$\frac{\partial T_l^\bullet}{\partial t^\bullet} = -v_l^\bullet\frac{\partial T_l^\bullet}{\partial z^\bullet} - \frac{1}{Re_l Pr_l}(\frac{\partial^2 T_l^\bullet}{\partial z^{2\bullet}} + \frac{1}{\epsilon_l}\frac{\partial \epsilon_l}{\partial z^\bullet}\frac{\partial T_l^\bullet}{\partial z^\bullet}) \qquad (12)$$

$$- St_{lc}(T_l^\bullet - T_c^\bullet) - St_{lw}(T_l^\bullet - T_a^\bullet)$$

Figure 1: A two-vessel continuous Kamyr digester system.

Figure 2: The conceptual model of the chip and liquor mass.

Figure 3: The model predictive control structure.

Figure 4: Estimation and prediction mode. Cooking temperature in the lower cooking circulation.

Figure 5: Estimation and prediction mode. Alkali concentration in the lower cooking circulation.

Figure 6: Controller design and simulation mode at disturbance rejection. A 3% increase in the eucalyptus content is made at time 0 hrs. The cooking temperature setpoint is related to the lower cooking circulation heater.

16

Figure 7: Controller design and simulation mode at production rate change. A 1 rpm decrease in the chip meter speed is made at time 0 hrs. The cooking temperature setpoint is related to the lower cooking circulation heater.

Figure 8: Siemens Advisory Digester Control.

Digester

| Mode 1 | Mode 2 | Future | Future | | IQ |
| Main | Simulation | Advisory | Future | | |

Kappa control loop (Feed forward)    16 : 21 : 9

The AA content in C5 has changed from 71 2 to 68 2 g/l
The AA content in C6 has changed from 23 6 to 24 4 g/l

Delete Advice

Interpretation
This AA level corresponds to a eucalypse content in the feed of ca. 13.5%.

Advice
Change the C6 temp by +0 5C to keep Kappa constant.

Advice Sheets

Control loop name
Advice sheet time
Process values
Setting button
Process value graphs
Interpretation
Advice

Figure 9: Example advisory control sheet.

**European Patent Office**

**EUROPEAN SEARCH REPORT**

Application Number

EP 97 12 0766

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | F.A. MICHELSEN, B.A. FOSS: "A comprehensive mechanistic model of a continuous Kamyr digester" APPLIED MATHEMATICAL MODELLING, ELSEVIER SCIENCE INC., vol. 20, no. 7, July 1996, NEW YORK, USA, pages 523-533, XP002061434 | 1-10 | G05B13/02 |
| Y | * page 524 - page 531; figures 1,2,5-15 * | 11-13 | |
| Y | R. MICHAELSEN, T. CHRISTENSEN ET AL: "Model predictive control of a continuous Kamyr digester" CONTROL SYSTEM '92, DREAM VS. REALITY, PREPRINTS CONFERENCE PROCEEDING, WHISTLER, BC, CANADA, 29 SEPT- 1 OCT 92, CANADIAN PULP & PAPER ASSOC., MONTREAL, QUEBEC, CANADA, pages 91-94, XP002061435 * the whole document * | 11-13 | |
| X | Y.L. SIDRAK: "Model-based optimization and control of Kamyr digester operation" ADVANCE CONTROL OF CHEMICAL PROCESSES, IFAC SYMPOSIUM, TOULOUSE, FRANCE, 14-16 OCT.91, PERGAMON PRESS, OXFORD, UK, pages 137-143, XP002061436 * page 139 - page 142; figure 5 * | 1-8, 10-13 | **TECHNICAL FIELDS SEARCHED (Int.Cl.6)** G05B |
| X | US 5 301 102 A (MARAS J TODD  ET AL) 5 April 1994 * column 3, line 36 - column 10, line 19; figures 1-5 * | 1,2,6 | |
| X | US 5 032 976 A (BELLER JEFFREY A  ET AL) 16 July 1991 * column 5, line 12 - column 18, line 44; figures 1,8 * | 1,2, 11-13 | |

-/--

The present search report has been drawn up for all claims

| Place of search | Date of completion of the search | Examiner |
|---|---|---|
| THE HAGUE | 6 April 1998 | Tran-Tien, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 97 12 0766

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | F.A. MICHELSEN, B.A. FOSS: "Modeling and simulation of the mass flow and reaction kinetics in a continuous Kamyr steam/liquor phase digester" MODELING, IDENTIFICATION AND CONTROL, vol. 15, no. 1, January 1994, NORWAY, pages 33-53, XP002061479 * page 35 - page 47; figure 1 * | 1-10 | |
| A | US 5 547 012 A (MARCOCCIA BRUNO S ET AL) 20 August 1996 * abstract * | 1 | |
| A | DD 216 747 A (VEB ZELLSTOFFWERK GRÖDITZ) 19 December 1984 * abstract * | 1 | |
| A | C.F. SHEWCHUK, W. MORTON: "The evolution of an on-line model based optimization system" CONTROL SYSTEMS '92, DREAM VS. REALITY, PREPRINTS, WHISTLER, BC, CANADA, 29 SEPT - 1 OCT 92, CANADIAN PULP & PAPER ASSOC., MONTREAL, QUEBEC, CANADA, pages 45-51, XP002061475 * page 47 - page 50; figures 1-3 * | 1-13 | TECHNICAL FIELDS SEARCHED (Int.Cl.6) |
| A | S.A. DEWITT, P.H. WANG: "Adaptive predictive nonlinear control- Part 3: Advanced control development, simulation testing and mill performance" CONTROL SYSTEMS '92, DREAM VS REALITY, PREPRINTS, WHISTLER, BC, CANADA, 29 SEPT - 1 OCT 92, CANADIAN PULP & PAPER ASSOC., MONTREAL, QUEBEC, CANADA, pages 135-148, XP002061476 * page 136 - page 140; figures 1-5 * | 1-13 | |

The present search report has been drawn up for all claims

| Place of search | Date of completion of the search | Examiner |
|---|---|---|
| THE HAGUE | 6 April 1998 | Tran-Tien, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)